## Europäisches Patentamt

## European Patent Office

## Office européen des brevets

(19)

(11) Veröffentlichungsnummer: **0 079 573**
**B1**

(12)

# EUROPÄISCHE PATENTSCHRIFT

(45) Veröffentlichungstag der Patentschrift:
**22.04.87**

(51) Int. Cl.⁴: **B 62 M 23/02**

(21) Anmeldenummer: **82110358.7**

(22) Anmeldetag: **10.11.82**

(54) **Fahrrad, insbesondere mit Elektromotor.**

(30) Priorität: **12.11.81 DE 3144884**
**09.03.82 DE 3208345**

(43) Veröffentlichungstag der Anmeldung:
**25.05.83 Patentblatt 83/21**

(45) Bekanntmachung des Hinweises auf die Patenterteilung:
**22.04.87 Patentblatt 87/17**

(84) Benannte Vertragsstaaten:
**AT BE CH DE FR GB IT LI LU NL SE**

(56) Entgegenhaltungen:
**AT - B - 327 023**
**CH - A - 148 321**
**CH - A - 241 133**
**DE - A - 2 218 730**
**FR - A - 888 278**
**FR - A - 2 082 868**
**FR - A - 2 259 741**
**FR - A - 2 279 608**
**FR - A - 2 316 114**
**FR - A - 2 354 235**
**FR - A - 2 411 302**
**FR - A - 2 427 244**
**GB - A - 1 554 161**
**US - A - 3 827 519**
**US - A - 3 921 745**
**US - A - 4 221 275**
**US - A - 4 280 581**

(73) Patentinhaber: **Gelhard, Egon, Zum Kelderberg 5,**
**D-5352 Zülpich-Dürscheven (DE)**

(72) Erfinder: **Gelhard, Egon, Zum Kelderberg 5,**
**D-5352 Zülpich-Dürscheven (DE)**

(74) Vertreter: **Baur, Eduard, Dr.-Ing. Dipl.-Ing.,**
**Werderstrasse 3, D-5000 Köln 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein Fahrrad mit Antrieb durch Pedale und einen Elektromotor, wobei letzterer mit einer Schaltung für Generatorbetrieb bei Schubfahrt bergab bzw. beim Bremsen ausgebildet und im Bereich zwischen Sitzrohr und Hinterrad angeordnet ist, mit einem ersten Freilauf im Pedal-Kettenrad, wobei eine einzige Kette das Pedal-Kettenrad des Pedalantriebes und das vom Elektromotor angetriebene Kettenrad umschlingt und ein Kettenspanner vorhanden ist, der nach Massgabe der Kettenspannung den Elektromotor regelt, der mit einer lösbaren Kupplung versehen ist.

Ein Fahrrad mit Elektromotor der vorbeschriebenen Ausbildung ist aus der französischen Patentschrift 2 259 741 bekannt. Die Anordnung des Elektromotors hinter dem Sitzrohr, wobei das vom Elektromotor angetriebene, von der Kette teilweise umschlungene Zahnrad unterhalb des Elektromotors angeordnet und über ein Winkelgetriebe mit Kegelrädern angetrieben ist, erfordert einen erheblichen baulichen Aufwand.

Zudem tritt der Elektromotor erst dann in Funktion, wenn der Radfahrer ein gewisses, vorgegebenes Mass an Arbeit erbringt.

Die Anpassung an unterschiedliche Fahrweisen ist infolgedessen unflexibel und der Bedienungskomfort unbefriedigend.

Ein Fahrrad mit Elektromotor ist weiterhin aus der amerikanischen Patentschrift 3 921 745 bekannt. Bei diesem kann der Elektromotor bei Schubfahrt, z.B. bei Bergabfahrt oder beim Bremsen, als Generator wirken und liefert Ladestrom für die Batterie. Die Motorleistung kann durch einen Sensor nach Massgabe der auf das Pedal einwirkenden Kraft des Fusses gesteuert werden. Nachteilig ist, dass die Verbindungsmittel zwischen Motor und Fahrrad keinen Freilauf aufweisen. Die zur Regelung der Motorleistung erforderliche Schalteinrichtung mit Sensor ist zudem sehr aufwendig und demzufolge störanfällig, die Regelbarkeit ist ebenfalls nicht zufriedenstellend.

Die vorliegende Erfindung geht von der Aufgabe aus, ein Fahrrad der gattungsgemässen Art zu schaffen, das bei kompakter Bauweise, günstigem Gewicht und Schwerpunkt ohne Kegelräder auskommt und bedienungsfreundlich ist, wobei der Fahrer jederzeit in flexibler Anpassung an die Fahrsituation den Kraftanteil bestimmen kann, der durch Pedalantrieb oder Motorantrieb erbracht werden soll.

Zur Lösung dieser Aufgabe wird bei einem Fahrrad mit Antrieb durch Pedale und einen Elektromotor, wobei letzterer mit einer Schaltung für Generatorbetrieb bei Schubfahrt bergab oder beim Bremsen ausgebildet und im Bereich zwischen Sitzrohr und Hinterrad angeordnet ist, mit einem ersten Freilauf im Pedal-Kettenrad, wobei eine einzige Kette das Pedal-Kettenrad des Pedalantriebes und das vom Elektromotor angetriebene Kettenrad umschlingt und ein Kettenspanner vorhanden ist, der nach Massgabe der Kettenspannung den Elektromotor regelt, der mit einer lösbaren Kupplung versehen ist, erfindungsgemäss vorgeschlagen, dass der Elektromotor in einem Rohr gelagert ist, das mit einer koaxial zur Motorachse liegenden Achse quer zum Rahmen zwischen Hinterrad und Tretlagergehäuse nahe letzterem angeordnet ist, und das Rohr die hinteren Gabelhälften des Rahmens verbindet, die Motorkupplung ein sperrbarer Freilauf ist und der Elektromotor das ihm zugeordnete Kettenrad über ein Stirnraduntersetzungsgetriebe antreibt, dessen Räder an einem der Hinterradgabelrohre gelagert sind.

Sehr vorteilhaft ist hierbei die Anordnung so ausgestaltet, dass der Elektroantrieb und der Pedalantrieb gemeinsam, aber voneinander trennbar auf die Hinterradnabe einwirken und dem Elektromotor ein zweiter Freilauf zugeordnet ist.

Dabei ist mit grossem Vorteil der erste Freilauf im Bereich zwischen den Speichen des Pedal-Kettenrades angeordnet und der zweite Freilauf dem Kettenrad des Elektromotors zugeordnet und sperrbar ausgebildet.

Die Erfindung löst in vorbildlicher Weise und mit einfachen wirtschaftlichen Mitteln die Aufgabe, bei einer kompakten, gewichtsparenden Bauweise und ohne Verwendung eines Kegelradgetriebeteiles sowie äusserst bedienungsfreundlich durch je einen Freilauf für sowohl den Pedal- als auch den Motorantrieb und somit sehr flexibel regelbar wahlweise vom Pedalantrieb zum Motorantrieb übergehen oder unter Nutzung beider Antriebsarten mit optimalem Leistungseinsatz fahren zu können.

Sie gibt dabei einen sicheren, raumsparenden und in den Fahrzeugrahmen integrierbaren Einbau des Elektromotors an, und sie ermöglicht mit Hilfe des dem Motor an der Hinterradnabe zugeordneten sperrbaren Freilaufs die Verwendung einer üblichen Hinterradnabe.

Bei einer besonders wirtschaftlichen sowie bedienungsfreundlichen Ausführung ist das Fahrrad mit einer Fahrgeschwindigkeitsabtastung, beispielsweise mit einer elektronischen Impulsabtastung, versehen, so dass der Elektromotor erst bei einer Mindestgeschwindigkeit beispielsweise von etwa einem Meter pro Sekunde zuschaltbar und somit vor Überlastungen, die einen hohen Stromverbrauch mit sich bringen, geschützt ist. Bei hohen Geschwindigkeiten bzw. bei Schubfahrt, etwa bei Bergabfahrten, schaltet die Impulsschaltung das Fahrrad auf Generatorbetrieb um, wobei die Batterie wieder aufgeladen wird.

In vorteilhafter Weise kann der Geschwindigkeitsimpuls dadurch erzeugt werden, dass am Vorderrad Magnete über den Umfang verteilt angebracht sind, die an Spulen, die an der Vorderradgabel befestigt sind, vorbeibewegt werden.

In weiterer erfindungsgemässer Ausgestaltung werden Mess- und Regeleinrichtungen vorgeschlagen, die die Motorleistung des zuschaltbaren Elektromotors in Relation zu der vom Fahrer über den Pedalantrieb aufgebrachten Antriebsleistung regeln.

Die Erfindung wird in schematischen Zeichnungen in einer bevorzugten Ausführungsform gezeigt, wobei aus den Zeichnungen weitere vorteilhafte Einzelheiten der Erfindung erkennbar sind.

Es zeigen:

Fig. 1 das Elektrofahrrad in Seitenansicht,

Fig. 2 den Antrieb des Hinterrades durch Pedal- und/oder Elektromotorantrieb, in Draufsicht,

Fig. 3 den hinteren Teil des Fahrrades mit Pedal- und/oder Elektroantrieb über eine gemeinsame Antriebskette, in Seitenansicht,

Fig. 4 einen Leistungsgeber für den Pedalantrieb mit Kettenspanner und Potentiometer, in perspektivischer Darstellung,

Fig. 5 einen Drehgriff zur Regulierung des prozentualen Anteils von Antriebsleistung durch Pedalkraft im Verhältnis zur Motorkraft, in perspektivischer Darstellung,

Fig. 6 in einem vertikalen Schnitt eine weitere Messeinrichtung zur Messung der Pedalkraft,

Fig. 7 die Anordnung nach Fig. 6 im horizontalen Schnitt entsprechend der Linie VII–VII, in der Ansicht von oben,

Fig. 8 einen Teilausschnitt eines Kettenrades des Pedalantriebs, in Seitenansicht,

Fig. 9 einen vertikalen Schnitt durch Fig. 8 entsprechend der dortigen Linie IX–IX,

Fig. 10 den oberen Abschnitt von Fig. 9.

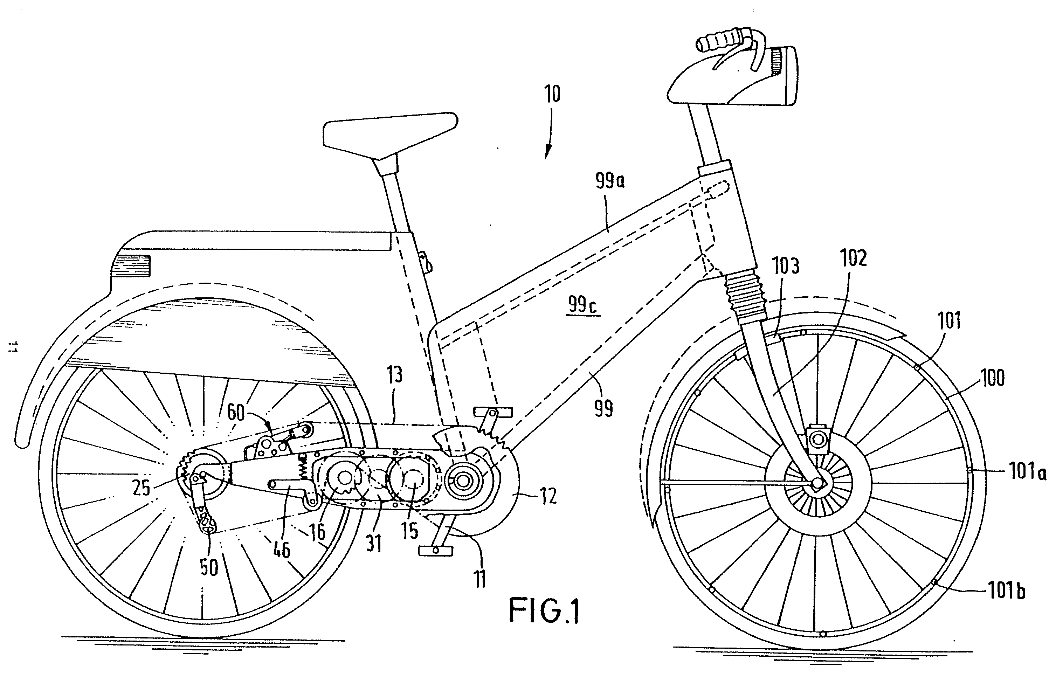

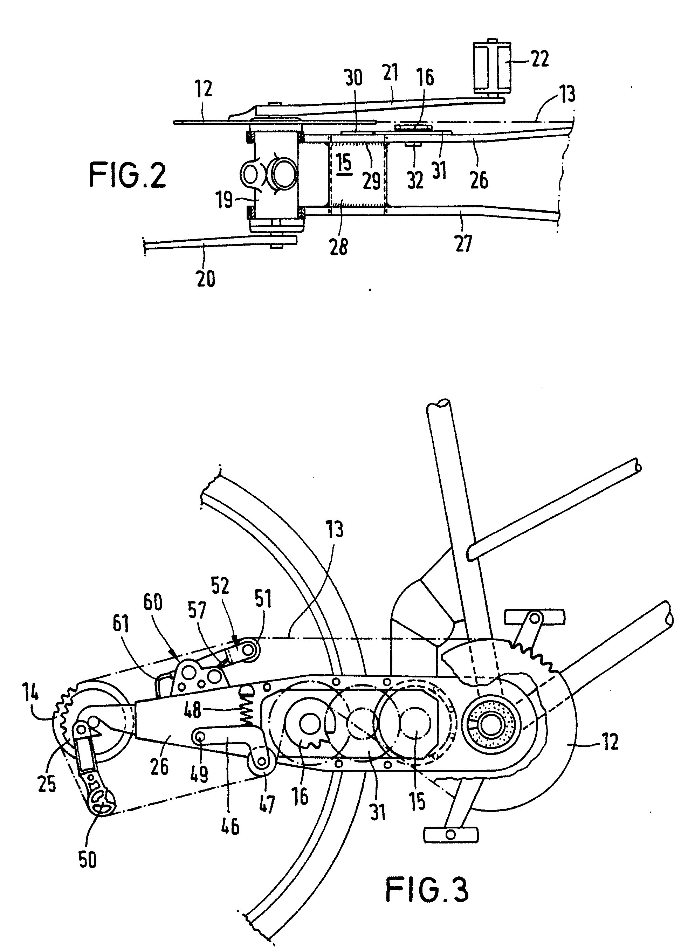

Nach Fig. 1 hat das Fahrrad 10 einen Pedalantrieb 11 mit Pedal-Kettenrad 12 und der Kette 13, die das Kettenrad 14 an der Hinterradnabe antreibt, wie das im einzelnen noch zu Fig. 2 beschrieben werden wird. Mit 15 ist ein Elektromotor dargestellt, der über ein Getriebe 31 und das Kettenrad 16 seine Antriebsleistung ebenfalls über die Kette 13 und das Kettenrad 14 auf die Hinterradnabe 14 überträgt.

Fig. 2 zeigt in Draufsicht das Tretlagergehäuse 19 mit den Tretkurbeln 20 und 21 mit Pedal 22. Mit 12 ist das Kettenrad bezeichnet, in dem der Freilauf des Pedalantriebes vorgesehen ist. Vom Kettenrad 12 geht die gemeinsame Antriebskette 13 aus, die das Kettenrad 14 an der Hinterradnabe antreibt. Es kann noch ein weiteres kleineres Kettenrad 25 vorhanden sein, wobei das Umschalten der Antriebskette 13 vom Kettenrad 14 auf das andere Kettenrad 25 oder umgekehrt in bekannter Weise mit einer Schalteinrichtung erfolgt.

Die beiden Hintergabelrohre 26 und 27 sind im nahen Bereich des Tretlagergehäuses 19 miteinander durch eine Traverse 28 verbunden, die nach dem Ausführungsbeispiel in Gestalt eines Rohres ausgebildet ist und durch Schweissungen 29 die Hintergabelrohre verbindet. In diesem Rohr ist der Elektromotor 15 angeordnet, der ein nach aussen aus dem Gabelrohr 26 vorstehendes Zahnrad 30 hat, das mit einem Zahnrad 31 kämmt, das in einem Lager 32 am Gabelrohr 26 gelagert ist. Der Elektromotor hat als Gleichstromkurzschlussläufer vorzugsweise eine Nennleistung von 300 Watt bei 24 Volt und 4500 Umdrehungen pro Minute. Seine Drehzahl ist stufenlos veränderlich. Er wird über einen Spannungsschalter und elektronischen Leistungsregler gesteuert.

Das Stirnrad 30 des Elektromotors und Stirnrad 31 sind in einem Untersetzungsverhältnis von 1:6 bis 1:7 vorhanden. An dem Stirnrad 31 ist das Kettenrad 16 vorhanden, das die gemeinsame Antriebskette 13 antreibt. Weil sowohl der Pedalantrieb 12 als auch der Elektroantrieb 15 gemeinsam über eine Kette 13 auf ein Kettenrad 14 an der Hinterradnabe wirken, sind sie durch Freiläufe 81 bzw. 98 sowie 16, voneinander trennbar. Und zwar ist dem Pedalantrieb der Freilauf 81 bzw. 98 und dem Elektromotor 15 ein Freilauf im Kettenrad 16 zugeordnet.

Fig. 3 zeigt die erfindungsgemässe Ausführung, bei welcher dem Kettenrad 12 des Pedalantriebes und dem Antriebsritzel 16, das über ein weiteres Getriebestirnrad 31 vom Antriebsritzel des Elektromotors 15 angetrieben wird, die gemeinsame Kette 13 zugeordnet ist. In Fahrtrichtung hinter dem Antriebsritzel 16, das die Kette 13 antreibt, ist ein Kettenspanner 46 mit der Spannrolle 47 angeordnet, welche durch den Druck der Feder 48 um die Achse 49 schwenkbar ist. Das Antriebsritzel 16 ist – wie vorgängig erwähnt – mit einem Freilauf versehen. Ebenfalls ist das Kettenrad 12 mit einem Freilauf versehen, der später noch beschrieben wird.

Fig. 3 zeigt weitere Einzelheiten der im Prinzip dargestellten Antriebe 12 bzw. 15 mit einer gemeinsamen Kette 13 in Seitenansicht. Vorhanden ist der Kettenwerfer 50, der in bekannter Weise die Kette 13 auf das Zahnrad 14 oder 25 unwerfen kann. Dies zeigt, dass die für den Elektroantrieb und Pedalantrieb vorhandene gemeinsame Kette 13 an der Hinterradnabe auch mit einem Kettenwerfer 50 versehen sein und damit durch bekannte Mittel ein Umwerfen auf die Kettenräder 14 bzw. 25 verschiedenen Durchmessers erfolgen kann. Beide Kettenräder 14 bzw. 25 können auch einen gemeinsamen Freilauf in der Nabe aufweisen.

Mit 51 ist weiter das Ritzel des leistungsabgreifenden Kettenspanners 51, 52 bezeichnet, das die Kette 13 von unten erfasst und somit in der Weise spannt, dass diese vom Tangentialpunkt des Kettenrades 12 zum Tangentialpunkt des Kettenrades 14 oder 25 nicht geradlinig, sondern, durch das Ritzel des Kettenspanners angehoben, mit einem leichten Knick verläuft.

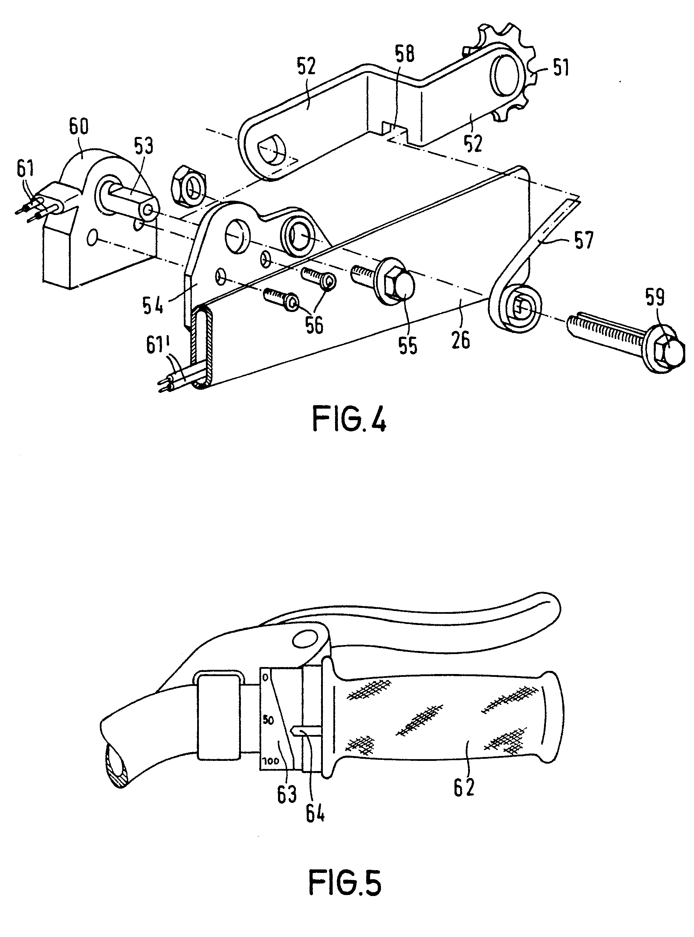

Die Einzelheiten des leistungsabgreifenden Kettenspanners 51, 52 ergeben sich aus Fig. 4. Das vorerwähnte Ritzel 51 ist an einer Achse an dem Hebel 52 drehbar gelagert, der etwa auf seiner halben Länge abgekröpft ist. Dieser Hebel 52 ist an einer Welle 53 befestigt, die abgeflacht ist, damit über eine dem Querschnitt der abgeflachten Welle 52 angepasste Ausnehmung im Hebel 52 der Drehwinkel des Kettenspannerhebels auf die Welle 53 übertragen wird. Diese Welle 53 ist an Halteflächen 54 mittels einer Schraube 55 befestigt. Das Halteblech 54 ist an der Hinterradschwinge 26 befestigt.

Die Spannung des Kettenspanners, d.h. die Kraft, mit der er von unten an die vom Pedalantrieb ausgehende Kette 13 angreift, wird eingestellt durch eine Wickelfeder 57, die mit ihrem vorderen freien Ende an einer am Hebel 52 vorhandenen Ausnehmung 58 angreift und mit dem anderen freien Ende in den Schlitz einer Schraube 59 eingeschoben ist.

Die Federkraft dieser Wickelfeder ist einstellbar. In Ruhestellung des Fahrrades ergibt sich durch eine bereits geringe oder eine grosse Federkraft eine Stellung des Ritzels, die mit «51» angegeben ist. Die Kette ist somit stark abgeknickt. Es ergeben sich jedoch durch unterschiedlich starke Einstellung der Wickelfeder Unterschiede beim Fahren. Sofern eine starke Pedalkraft oder mit anderen Worten ein starkes Drehmoment und ein entsprechend starker Zug auf die Kette ausgeübt wird, dann wird das Ritzel abhängig von der ausgeübten Kraft nach unten gedrückt, so dass es bei starker Kraft die Stellung 51 hat. Entsprechend wird auch das Potentiometer 60 um einen grösseren Winkelbetrag gedreht, so dass abhängig vom Mass dieser Drehung, übertragen durch die elektrischen Leitungen 61 und 61', eine stärkere Antriebsleistung durch den Elektromotor 15 erfolgt. Ist jedoch die Feder nicht so stark vorgespannt – ein schwächerer Fahrer will eine nicht so starke Vorspannung – dann wird bereits bei geringer Kraftaufwendung die Kette und damit auch das Kettenritzel in die in Fig. 5 mit 51 bezeichnete Stellung gelangen, so dass ebenfalls der Elektromotor proportional zur Antriebsleistung über das Pedal betätigt wird.

Da bei einer Umdrehung des Pedalrades 12 abhängig von der Stellung der Pedale, die in ihrer Stellung vertikal übereinander durch die Füsse des Fahrers nur ein geringes Drehmoment, in ihrer Stellung nebeneinander in horizontaler Ebene jedoch ein maximales Drehmoment ergeben, unterschiedliche Kräfte ausgeübt werden, die auch zu einer jeweils unterschiedlichen Spannung und somit Schwingungen im Obertrum der Kette 13 führen, wird vorgeschlagen, diese Ungleichförmigkeiten in der Leistung durch ein elektronisches Zeitglied auszugleichen und somit einen Mittelwert für die Regelung des Potentiometers zu erhalten, so dass das Potentiometer die Leistung des Elektromotors gleichmässig steuert und die bei jeder Umdrehung des Kettenrades wenn auch in geringem Masse entstehende unterschiedliche Drehzahl oder Leistung des Elektromotors ausgeglichen werden.

Die Schwingungen der Kette übertragen sich auf das Potentiometer, das die Leistung des Elektromotors steuert.

Fig. 5 zeigt am Lenker einen Drehgriff 62, über den der Fahrer über ein weiteres Potentiometer das prozentuale Verhältnis einstellen kann, mit dem über Pedalkraft und/oder Elektromotor die Fahrleistung erbracht werden soll, und zwar unabhängig davon, ob jeweils eine geringe oder grössere Antriebskraft notwendig ist. Der Drehgriff 62 betätigt ein Potentiometer, das über eine Impulssteuerung die Leistung des Elektromotors 15 regelt. Vorhanden ist eine Skala 63 mit einer Einteilung 0 bis 100 Prozent in Verbindung mit einem am Drehgriff angeordneten Zeiger 64.

Durch den Drehgriff 62 wählt der Fahrer das prozentuale Verhältnis der von ihm oder dem Elektromotor zu erbringenden Leistung. Nach der Darstellung wird an der Gesamtantriebsleistung durch den Elektromotor ein prozentualer Anteil von 60 Prozent erbracht, während durch den Fahrer über das Pedal nur eine verbleibende Leistung von 40 Prozent erbracht wird. Sofern der Fahrer den Drehgriff so dreht, dass der Zeiger an der Skala 63 die Zahl Null anzeigt, dann bedeutet dies, dass die Antriebsleistung ausschliesslich durch Pedalkraft erbracht wird.

Es sei bemerkt, dass die Einstellvorrichtung zur Bestimmung der prozentualen Antriebsleistung über Pedalkraft und/oder Elektromotor auch aus anderen Verstelleinrichtungen bestehen kann.

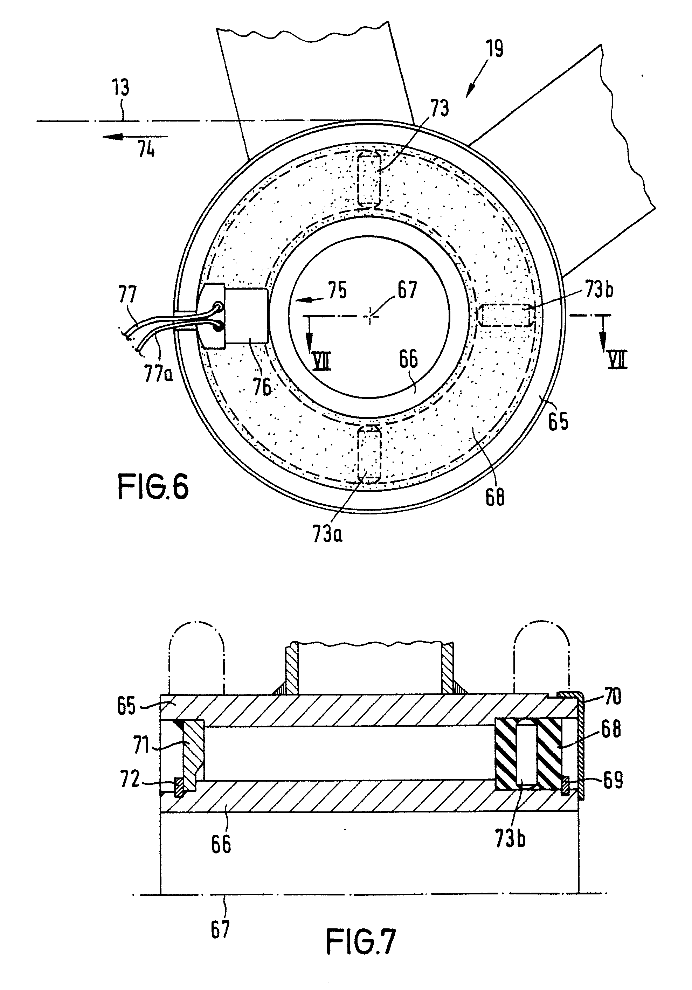

Fig. 6 zeigt im vertikalen Schnitt die Anordnung einer Messeinrichtung mit einem verformbaren Element, beispielsweise Gummi, zur Messung der Pedalkraft. Dazu ist das Tretlager 19 für das Kettenrad 12 aus einem äusseren Tretlagerrohr 65 und einem inneren Tretlagerrohr 66 gebildet. Innerhalb des Tretlagerrohres 66 ist somit das Lager des Kettenrades 12 mit der Drehachse 67 vorhanden. Zwischen den beiden Rohren 65 und 66 ist an dem Rand, der dem Kettenrand gegenüberliegt, ein verformbares, aus Gummi bestehendes Element 68 vorhanden, das in einer entsprechenden Vertiefung von Aussenrohr 65 und Innenrohr 66 in Verbindung mit einem Sicherungsring 69 (Fig. 7) gehalten ist. Dieses Element ist abgedeckt durch ein Blech 70. An dem gegenüberliegenden Ende der Rohre 65 und 66 ist ein nicht verformbarer, aus Metall bestehender Ring 71 an dem Aussenrohr 65 angeschweisst und am Innenrohr 66 durch einen Sicherungsring 72 gehalten. In Fahrtrichtung sind in der vorderen Hälfte Abstandshalter vorhanden, hier in Gestalt dreier Stifte 73, 73a, 73b, denen die Aufgabe zukommt, dass bei der Belastung des Gummielementes 68 während eines Drehvorganges dieser im vorderen Bereich keine Verformung erleidet, vielmehr die Kette auf den Ring 68 lediglich eine in angegebener Pfeilrichtung 74 wirkende Kraft ausüben kann mit der Massgabe, dass der Innenring 66 in angegebener Pfeilrichtung 75 verschoben wird. Diese Verschiebung, die abhängig ist von dem Drehmoment oder der auf die Kette ausgeübten Kraft als Gegenkraft, wird auf einen piezoelektrischen Druckaufnehmer 76 übertragen, der mit elektrischen Drähten 77, 77a versehen ist und den erhaltenen Wert an die Steuereinrichtung überträgt, die in der vorbeschriebenen Weise den Mittelwert ermittelt und an die Steuerung des Antriebs für den elektrischen Antriebsmotor abgibt in der Weise, dass, sofern der Fahrer über Pedalkraft eine starke Kraft ausübt, entsprechend auch der Elektromotor eine entsprechende starke Leistung bringen soll. Übt der Fahrer keine Kraft aus, beispielsweise, weil das Fahrrad auf einer abschüssigen Strasse fährt, dann übt entsprechend auch der Elektromotor keine Kraft aus. Es sei bemerkt, dass dies unabhängig davon geschieht, in welchem prozentualen Anteil entsprechend der Schilderung zum Drehgriff nach Fig. 5 der Fahrer und/oder der Elektromotor an der Gesamtantriebsleistung beteiligt sein soll.

Die Zusammenschau der Fig. 8 und 9 zeigt ein übliches Lagergehäuse 78, in das eine Drehlagerbuchse 79 eingeschraubt ist zur Lagerung des Tretlagers 80, an dessen nach aussen vorstehendem Ende das insgesamt mit 12 bezeichnete Kettenrad befestigt ist. Dieses hat in bekannter Weise Speichen 81, 82, 83. Zur Bemessung der Pedalkraft ist ein aus Gummi bestehender Ring 84 vorhanden, der in Achsrichtung des Kettenkranzes ausgerichtete Stege 85, 86, 87 usw. hat, deren Anzahl und Abstand der Anzahl und dem Abstand der Speichen 81, 82, 83 usw. entspricht. Die Speichen sind unterteilt. Sie haben innere Abschnitte 88 und äussere Abschnitte 89, wobei die inneren Abschnitte Auflageflächen 90 haben, die in ihrer Mehrheit eine Umfangsfläche bilden und in Radialrichtung sowie Axialrichtung erstreckende Flächen 91 haben. Die äusseren Abschnitte 89 haben in Radial- und Axialrichtung sich erstreckende Flächen 92 und obere Anlageflächen 93, die ebenfalls in ihrer Mehrheit, den einzelnen Speichen zugeordnet, eine Umfangsfläche bilden. Die vorgenannten Flächen der Stege umgreifen jeweils einen Steg 85.

An dem Ring 84 ist eine erste Permanent-Magnetscheibe 94 befestigt, der gegenüber liegt eine zweite Permanent-Magnetscheibe 95, die am Tretlagergehäuse 78 ortsfest angeordnet ist. Dieser ist ein Messaufnehmer 96 (Fig. 10) zur Messung einer elektromagnetischen Feldgrösse, hier vorteilhaft in Gestalt eines Hall-Sonden-Magnetometers, zugeordnet. Sofern in angegebener Drehrichtung 97 die Flächen oder dergleichen Körper 91 der Speichen 81, 82 und 83 usw. auf die jeweils zugeordneten Stege 85, 86 und 87 des gummielastischen Körpers 84 einen Druck ausüben, tritt eine Verformung der Gummistege auf, die aus Fig. 12 hervorgeht mit der Massgabe, dass die Permanent-Magnetscheibe 94 sich der gegenüberliegenden Permanent-Magnetscheibe 95 nähert. Die dadurch erfolgende Veränderung der magnetischen Stärke wird dann gemessen und als Mass für die ausgeübte Pedalkraft oder das vorhandene Drehmoment zur Steuerung der Antriebsleistung des Elektromotors verwendet.

Die Speichen sind unterteilt. Mit 98 (Fig. 8, 9) ist der Freilauf im Kettenrad 12 dargestellt.

Fig. 1 zeigt, dass der Raum zwischen unterem Rahmenrohr 99 und oberem Rahmenrohr 99a mit einer Verkleidung 99c versehen ist und unter dieser Verkleidung die Batterien für den Antrieb des Elektromotors angeordnet sind. Damit liegen die Batterien auch in einem in bezug auf den Schwerpunkt günstigen zentrischen Bereich des Fahrrades. Im übrigen sind die Batterien, die vorzugsweise einzeln zwei Volt haben, (es sind vorzugsweise 12 Batterien für 24 Volt geschaltet) aufladbar, z.B. durch Strom von 220 Volt. Das Ladegerät kann ebenfalls im Rahmen untergebracht sein und ist vorteilhaft in dem Raum zwischen unterem und oberem Rahmenrohr im Bereich der Batterien vorhanden.

In Fig. 1 ist eine Impulserzeugungsanlage gezeigt. An der Felge 100 des Vorderrades sind in gleichmässigen Abständen Magnete 101, 101a, 101b angeordnet, die in Verbindung mit einer an der Vorderradgabel 102 vorhandenen Spule 103 oder mehreren Spulen elektrische Impulse erzeugen. Der somit reibungsfrei arbeitende Tachogenerator kann, da abhängig von der Umfangsgeschwindigkeit und der Anzahl der Magnete Impulse gegeben werden, zur Registrierung verwendet werden, so beispielsweise zur Ermittlung der Geschwindigkeit und der Wegstrecke. Die erzeugten Stromimpulse pro Zeiteinheit können aber auch in Verbindung mit elektronischen Schaltelementen dazu verwendet werden, eine bestimmte Geschwindigkeit einzuhalten in der Weise, dass, sofern der Benutzer über den Pedalantrieb die Geschwindigkeit nicht erreicht, automatisch der Elektroantrieb 15 zugeschaltet wird. Auch kann die Impulsgabe dazu führen, dass der Elektromotor 15 ausgeschaltet oder bei Bergabfahrt und Überschreiten einer gewissen Geschwindigkeit eine Kupplung eingeschaltet wird und der angetriebene Elektromotor als Generator Strom erzeugt und die Batterien speist, die im Bereich zwischen unterem Rahmenrohr 99 und oberem Rahmenrohr 99a angeordnet sind. Der Impulsgeber kann auch als Stromerzeuger aus Magneten 101, 101a, 101b und Spulen 103 verwendet werden und ist frei von mechanischer Reibung. Sofern durch einen Schalter ein Stromverbraucher eingeschaltet wird, setzt die Stromerzeugung ein.

Der neue Generator aus Magneten 101, 101a, 101b und Spulen 103 ist besonders geeignet für die Massgabe, dass durch eine Fahrgeschwindigkeitsabtastung, insbesondere durch eine elektronische Impulsabtastung, der Motor 15 erst bei Erreichen einer Mindestgeschwindigkeit des Fahrrades, vorzugsweise bei ca. einem Meter pro Sekunde eingeschaltet wird. Dadurch soll vermieden werden, dass der Elektroantrieb zum Anfahren benutzt wird, weil für das Anfahren die meiste Energie benötigt wird. Diese soll aber weitgehend gespart werden, um den Aktionsradius zu erhöhen.

**Patentansprüche**

1. Fahrrad mit Antrieb durch Pedale (22) und einen Elektromotor (15), wobei letzterer mit einer Schaltung für Generatorbetrieb bei Schubfahrt bergab oder beim Bremsen ausgebildet und im Bereich zwischen Sitzrohr und Hinterrad angeordnet ist, mit einem ersten Freilauf (98) im Pedal-Kettenrad (12), wobei eine einzige Kette (13) das Pedal-Kettenrad (12) des Pedalantriebes (11) und das vom Elektromotor (15) angetriebene Kettenrad (16) umschlingt und ein Kettenspanner (51, 52) vorhanden ist, der nach Massgabe der Kettenspannung den Elektromotor (15) regelt, der mit einer lösbaren Kupplung versehen ist, dadurch gekennzeichnet, dass der Elektromotor (15) in einem Rohr (28) gelagert ist, das mit einer koaxial zur Motorachse liegenden Achse quer zum Rahmen zwischen Hinterrad und Tretlagergehäuse (19) nahe letzterem angeordnet ist, und das Rohr (28) die hinteren Gabelhälften (26, 27) des Rahmens verbindet, die Motorkupplung ein sperrbarer Freilauf ist und der Elektromotor (15) das ihm zugeordnete Kettenrad (16) über ein Stirnraduntersetzungsgetriebe antreibt, dessen Räder (30 bzw. 31) an einem der Hinterradgabelrohre (26 bzw. 27) gelagert sind.

2. Fahrrad nach Anspruch 1, dadurch gekennzeichnet, dass der Elektromotor (15) und der Pedalantrieb (12, 13) gemeinsam, aber voneinander trennbar auf die Hinterradnabe einwirken und dem Elektromotor (15) ein zweiter Freilauf (16) zugeordnet ist.

3. Fahrrad nach Anspruch 1, dadurch gekennzeichnet, dass der erste Freilauf (98) im Bereich zwischen den Speichen (81) des Pedal-Kettenrades (12) angeordnet und der zweite Freilauf (16) dem Kettenrad des Elektromotors (15) zugeordnet und sperrbar ausgebildet ist.

4. Fahrrad nach Anspruch 1, dadurch gekennzeichnet, dass es Mittel zur Fahrgeschwindigkeitsabtastung aufweist, insbesondere eine elektronische Impulsabtastung, mit welchen der Motor (15) erst bei Erreichen einer Mindestgeschwindigkeit des Fahrrades, vorzugsweise bei ca. einem Meter pro Sekunde, einschaltbar und bei zu hoher Geschwindigkeit ausschaltbar oder auf Generatorbetrieb umschaltbar ist.

5. Fahrrad nach Anspruch 1, dadurch gekennzeichnet, dass zur Fahrgeschwindigkeitsabtastung am Umfang der Felge (100), insbesondere des Vorderrades, in gleichmässigen Abständen Magnete (101, 101a, 101b) angeordnet sind und an der den Magneten (101, 101a, 101b) gegenüberliegenden Seite der Gabel (102) eine oder mehrere Spulen (103) angeordnet sind.

6. Fahrrad nach Anspruch 1, dadurch gekennzeichnet, dass der prozentuale Anteil der über den Pedalantrieb (12, 13) ausgeübten Leistung und der vom Motor (15) erbrachten Leistung an der Gesamtantriebsleistung mittels einer auf eine Regeleinrichtung einwirkenden Einstellvorrichtung (62, 63, 64) elektronisch regel- und voreinstellbar ist.

7. Fahrrad nach Anspruch 1, dadurch gekennzeichnet, dass dem Pedalantrieb (12) eine Messeinrichtung (Adapter) zugeordnet ist, der die jeweils vom Fahrer durch den Pedalantrieb (12) aufgebrachte Leistung abtastet und dieser Wert zur Steuerung der Antriebsleistung des Elektromotors (15) dient und eine weitere, vom Fahrer betätigbare Einstellvorrichtung (62) vorhanden ist, die das prozentuale Verhältnis der Antriebsleistung durch den Elektromotor (15) zur Antriebsleistung durch den Pedalantrieb steuert.

8. Fahrrad nach Anspruch 1, dadurch gekennzeichnet, dass die vom Fahrer über den Pedalantrieb (12) erbrachte Leistung über ein Potentiometer (60) und eine Impulssteuerung zur Regelung der Antriebsleistung des Elektromotors (15) übertragen und ein vom Fahrer verstellbares zweites Potentiometer (62) zur Steuerung des prozentualen Verhältnisses der Antriebsleistung durch den Pedalantrieb (12) und/oder den Elektromotor (15) vorhanden ist.

9. Fahrrad nach einem der Ansprüch 6 bis 8, dadurch gekennzeichnet, dass die Mess- bzw. Regeleinrichtung ein elektrisches Zeitglied zur Glättung der Leistungs-Ungleichförmigkeit und der mechanischen Lastspitzen des Pedalantriebes (12) aufweist.

10. Fahrrad nach Anspruch 9, dadurch gekennzeichnet, dass die Messeinrichtung (Adapter) aus einem mit einer Feder (57) versehenen Kettenspanner (51, 52) besteht, dessen Drehachse (53) zugleich die Drehachse des Potentiometers (60) ist.

11. Fahrrad nach Anspruch 10, dadurch gekennzeichnet, dass die, vorzugsweise als Spiralfeder ausgebildete, Feder (57) des Kettenspanners (51, 52) in ihrer auf den Kettenspanner wirksamen Kraft auf die spezifische Leistung oder das Leistungsvorhaben des Fahrers einstellbar ist, wobei das äussere Ende an einem Hebel (52) des Kettenspanners anliegt und das innere Ende in einem Schlitz einer die Federspannung einstellenden Stellschraube (59) eingreifend angeordnet ist.

12. Fahrrad nach Anspruch 7, dadurch gekennzeichnet, dass die Messeinrichtung ein dem Pedalantrieb (12) zugeordnetes verformbares Element (68), beispielsweise aus Gummi oder Kunststoff, aufweist, das durch die auf den Pedalantrieb (12) ausgeübte Kraft verformbar ist und eine die Verformung ermittelnde Einrichtung (76, 96) vorhanden ist, deren Wert in Verbindung mit einer zugeordneten Steuerung zur Beeinflussung der Leistung des Elektromotors (15) dient.

13. Fahrrad nach Anspruch 12, dadurch gekennzeichnet, dass das Tretlager (19) aus einem äusseren Tretlagerrohr (65) und einem im radialen Abstand befindlichen koaxialen inneren Tretlagerrohr (66) besteht, wobei in dem Raum zwischen dem äusseren Tretlagerrohr und dem inneren Tretlagerrohr ein Ring (68) aus verformbarem Werkstoff, z.B. Gummi oder Kunststoff, vorhanden ist, und ein im Aussenrohr (65) angeordneter, an der Aussenmatelfläche des inneren Tretlagerrohres (66) anliegender piezoelektrischer Druckaufnehmer (76) vorhanden ist.

14. Fahrrad nach Anspruch 12, dadurch gekennzeichnet, dass die Messeinrichtung zur Messung eines Drehmomentes oder der Antriebskraft, insbesondere der Pedalkraft oder der vom Pedal-Kettenrad (12) ausgehenden Antriebskraft, dient, dass an dem sich drehenden Pedal-Kettenrad (12) ein verformbares Element (84), insbesondere aus einem Werkstoff wie Gummi oder dergleichen, vorhanden ist, das abhängig von der Grösse des Drehmomentes oder der Kraft unterschiedlich verformbar ist und mit dem verformbaren Element (84) ein erster Permanent-Magnetkörper (94) verbunden ist, dem ein an einem nichtdrehbaren Bauteil (78) angebrachter, in Abstand befindlicher, zweiter Permanent-Magnetkörper (95) zugeordnet ist und der durch die Verformung des verformbaren Elementes (84) mit dem daran befindlichen ersten Permanent-Magnetkörper (94) veränderliche Abstand zwischen beiden Permanent-Magnetkörpern (94, 95) durch einen Messaufnehmer (96) für elektromagnetische Feldgrössen, insbesondere in Gestalt eines Magnetometers, gemessen wird.

15. Fahrrad nach Anspruch 14, dadurch gekennzeichnet, dass die zweite Permanent-Magnetscheibe (95) am Tretlagerrohr (78) befestigt ist.

16. Fahrrad mit Messeinrichtung nach Anspruch 15, dadurch gekennzeichnet, dass das verformbare Element (84) ringförmig oder als Ring ausgebildet zwischen den Speichen (81, 82, 83) des Pedal-Kettenrades (12) angeordnet ist und diese verbindet.

## Claims

1. Bicycle with drive through pedals (22) and an electrical motor (15), wherein the latter is constructed with a circuit for generator operation during overrun travel downhill or during braking and arranged in the region between seat tube and rear wheel, with a first freewheel (98) in the pedal chain wheel (12), wherein a single chain (13) loops around the pedal chain wheel (12) of the pedal drive (11) and the chain wheel (16) driven by the electrical motor (15) and a chain tightener (51, 52) is present, which in accordance with the chain tension regulates the electrical motor (15), which is provided with a disengageable clutch, characterised thereby, that the electrical motor (15) is borne in a tube (28), which is arranged with an axis lying co-axially with the axis of the motor transversely to the frame between the rear wheel and the pedal bearing housing (19) near the latter, and the tube (28) connects the rear fork halves (26, 27) of the frame, the motor clutch is a lockable freewheel and the electrical motor (15) drives the chain wheel (16) associated with it by way of a spur wheel step-down gear, the wheels (30 or 31) of which are borne at one of the rear wheel fork tubes (26 or 27).

2. Bicycle according to claim 1, characterised thereby, that the electrical motor (15) and the pedal drive (12, 13) act jointly, but each separably from the other on the rear wheel hub and a second freewheel (16) is associated with the electrical motor (15).

3. Bicycle according to claim 1, characterised thereby, that the first freewheel (98) is arranged in the region between the spokes (81) of the pedal chain wheel (12) and the second freewheel (16) is associated with the chain wheel (16) of the electrical motor (15) and constructed to be lockable.

4. Bicycle according to claim 1, characterised thereby, that it displays means for the scanning of travel speed, in particular an electronic pulse scanning, by which the motor (15) is able to be switched on only on the attainment of a minimum speed of the bicycle, preferably at about one metre per second, and switched off or switched over to generator operation at too high a speed.

5. Bicycle according to claim 1, characterised thereby, that magnets (101, 101a, 101b) are arranged at uniform spacings at the circumference of the rim (100), in particular of the front wheel, for the scanning of travel speed and one or more coils (103) are arranged at that side of the fork (102), which lies opposite the magnets (101, 101a, 101b).

6. Bicycle according to claim 1, characterised thereby, that the percentage components of the power exerted by way of the pedal drive (12, 13) and of the power produced by the motor (15) in relation to the total driving power is regulable and presettable electronically by means of a setting device (62, 63, 64) acting on a regulating equipment.

7. Bicycle according to claim 1, characterised thereby, that a measuring equipment (adapter) is associated with the pedal drive (12) and scans the power exerted at any time by the rider through the pedal drive (12), this value serves for the control of the driving power of the electrical motor (15) and a further setting device (62) is present, which is actuable by the rider and controls the percentage ratio of the driving power through the electrical motor (15) to the driving power through the pedal drive.

8. Bicycle according to claim 1, characterised thereby, that the power exerted by the rider by way of the pedal drive (12) is transmitted by way of a potentiometer (60) and a pulse control for the regulation of the driving power of the electrical motor (15) and a second potentiometer (62), which is adjustable by the rider, is present for the control of the percentage of the driving power through the pedal drive (12) and/or the electrical motor (15).

9. Bicycle according to one of the claims 6 to 8, characterised thereby, that the measuring or regulating equipment displays an electrical time constant member for the smoothing of the unevenness of power and of the mechanical load peaks of the pedal drive (12).

10. Bicycle according to claim 9, characterised thereby, that the measuring equipment (adapter) consists of a chain tightener (51, 52), which is provided with a spring (57) and the rotational axis (53) of which is at the same time the rotational axis of the potentiometer (60).

11. Bicycle according to claim 10, characterised thereby, that the spring (57), preferably constructed as spiral spring, of the chain tightener (51, 52) is settable in its force effective on the chain tightener to the specific power or to the intended power of the rider, wherein the outer end lies against a lever of the chain tightener and the inner end is arranged to be engaging in a slot of a set-screw (59) setting the spring tension.

12. Bicycle according to claim 7, characterised thereby, that the measuring equipment displays a deformable element (68), which is associated with the pedal drive (12), is for example of rubber or synthetic material and which is deformable by the force exerted on the pedal drive (12), and an equipment (76, 96) is present, which determines the deformation, the value of which in conjunction with an associated control serves for the influencing of the power of the electrical motor (15).

13. Bicycle according to claim 12, characterised thereby, that the pedal bearing (19) consists of an outer pedal bearing tube (65) and a co-axial inner pedal bearing tube (66) disposed at a radial spacing, wherein a ring (68) of deformable material – for example, rubber or synthetic material – is present in the space between the outer pedal bearing tube and the inner pedal bearing tube and a piezo-electric pressure pick-up (76) is present, which is arranged in the outer tube (65) and rests against the external envelope surface of the inner pedal bearing tube (66).

14. Bicycle according to claim 12, characterised thereby, that the measuring equipment serves for the measurement of a turning moment or of the driving force, in particular of the pedal force or of the driving force emanating from the pedal chain wheel (12), that a deformable element (84), in particular of a material such as rubber or the like, is present at the rotating pedal chain wheel (12) and deformable in dependence on the magnitude of the turning moment and the deformable element (84) is connected with a first permanent magnet body (94), which is associated with a second permanent magnet body (95) disposed at a spacing and mounted at a non-rotatable component (78), and the spacing between both the permanent magnet bodies (94, 95), which is variable due to the deformation of the deformable element (84) with the first permanent magnet body (94) disposed thereat, is measured by a measurement pick-up (96) for electromagnetic field magnitudes, in particular in the form of a magnetometer.

15. Bicycle according to claim 14, characterised thereby, that the second permanent magnetic disc (95) is fastened at the pedal bearing tube (78).

16. Bicycle with measuring equipment according to claim 15, characterised thereby, that the measuring equipment is annular or constructed as ring, is arranged between the spokes (81, 82, 83) of the pedal chain wheel (12) and connects these.

## Revendications

1. Bicyclette avec un entraînement à pédales (22) et par un moteur électrique (15), ce dernier étant muni d'un réglage permettant de passer au fonctionnement en génératrice dans le cas d'une course propulsée en descente ou en freinage, et disposé entre le tube de selle et la roue arrière, avec une première roue libre (98) dans le pignon de pédalier (12), une seule chaîne (13) entourant le pignon de pédalier (12) de l'entraînement à pédales (11) et le pignon (16) entraîné par le moteur électrique (15) et un tendeur de chaînes (51, 52) étant prévu, réglant la tension de la chaîne du moteur électrique (15) qui est munie d'un accouplement séparable, bicyclette caractérisée en ce que le moteur électrique (15) est monté dans un tube (28) qui est disposé de façon coaxiale au moteur dans un sens perpendiculaire au cadre, entre la roue arrière et le carter du palier de pédalier (19), à proximité de ce dernier, et que le tube (28) relie entre elles les moitiés de fourches arrières (26, 27) du cadre, que l'accouplement du moteur est une roue libre enrayable et que le moteur électrique (15) entraîne le pignon (16) qui lui est associé à travers un démultiplicateur à pignon droit, dont les pignons (30 et 31) sont montés sur un tube à fourches arrières (26 et 27).

2. Bicyclette selon la revendication 1, caractérisée en ce que le moteur électrique (15) et l'entraînement à pédales (12, 13) agissent en commun, mais de façon séparable l'un de l'autre, sur le moyeu de la roue arrière et que le moteur électrique (15) est associé à une deuxième roue libre (16).

3. Bicyclette selon la revendication 1, caractérisée en ce que la première roue libre (98) est disposée dans une zone comprise entre les rayons (81) du pignon de pédalier (12) et la deuxième roue libre (16) du pignon du moteur électrique (15) et qu'elle est conçue sous forme enrayable.

4. Bicyclette selon la revendication 1, caractérisée en ce qu'elle présente un moyen de détection de la vitesse de roulement, en particulier un détecteur à impulsions électronique qui permet de n'enclancher le moteur (15) qu'au moment où la bicyclette a atteint une vitesse minimale, de préférence 1 mètre par seconde, et de déconnecter le moteur électrique pour des vitesses trop élevées ou de le faire passer sur le mode de fonctionnement en génératrice.

5. Bicyclette selon la revendication 1, caractérisée en ce que, pour détecter la vitesse de roulement, des aimants (101, 101a, 101b) sont disposés à distance régulière sur la circonférence de la jante (100), en particulier de la roue avant, et que sur la face opposée aux aimants (101, 101a, 101b) de la fourche (102), se trouvent disposées une ou plusieurs bobines (103).

6. Bicyclette selon la revendication 1, caractérisée en ce que, la proportion dans laquelle la puissance d'entraînement totale est composée par la puissance fournie à travers l'entraînement à pédale (12, 13) et la puissance fournie par le moteur (15) est réglable et préréglable électroniquement au moyen d'un dispositif d'ajustage (62, 63, 64) agissant sur un dispositif de réglage.

7. Bicyclette selon la revendication 1, caractérisée en ce que l'entraînement à pédales (12) est associé à un dispositif de mesures (adapteur) qui détecte la puissance fournie à tout moment par le cycliste à travers l'entraînement à pédales (12) et que cette valeur sert à commander la puissance d'entraînement du moteur électrique (15) et qu'il est prévu un autre dispositif d'ajustage (62), actionnable par le cycliste, qui commande le rapport de la puissance d'entraînement par le moteur électrique (15) à la puissance d'entraînement par l'entraînement à pédales.

8. Bicyclette selon la revendication 1, caractérisée en ce que la puissance fournie par le cycliste à travers l'entraînement à pédales (12) est transmise à travers un potentiomètre (60) et une commande à impulsions pour le réglage de la puissance d'entraînement du moteur électrique (15) et qu'il est prévu un deuxième potentiomètre (62) réglable par le cycliste pour commander le rapport entre la puissance d'entraînement fournie par l'entraînement à pédales (12) et/ou la puissance d'entraînement fournie par le moteur électrique (15).

9. Bicyclette selon l'une des revendications 6 à 8, caractérisée en ce que le dispositif de mesure et de réglage comporte un relais de temporisation pour égaliser les irrégularités de puissance et les points de charge mécanique de l'entraînement à pédales (12).

10. Bicyclette selon la revendication 9, caractérisée en ce que le dispositif de mesure (adaptateur) est constitué par un tendeur de chaînes (51, 52) muni d'un ressort (57) dont l'axe de rotation (53) est identique à l'axe de rotation du potentiomètre (60).

11. Bicyclette selon la revendication 10, caractérisée en ce que la force du ressort (57) du tendeur de chaînes (51, 52) conçu de préférence sous la forme d'un ressort hélicoïdal, agissant sur le tendeur de chaînes, est ajustable selon la puissance spécifique ou la puissance prévu du cycliste, l'extrêmité extérieure du ressort s'appuyant sur un levier (52) du tendeur de chaînes et l'extrêmité intérieure pénétrant dans une fente d'une vis de réglage (59) permettant d'ajuster la tension du ressort.

12. Bicyclette selon la revendication 7, caractérisée en ce que le dispositif de mesure présente un élément déformable (68) associé à l'entraînement à pédales (12), constitué par du caoutchouc ou une matière synthétique, qui est déformable par la force exercée sur l'entraînement à pédales (12) et qu'il est prévu un dispositif (76, 96) permettant d'évaluer la déformation, dont la valeur sert, en liaison avec une commande associée, à agir sur la capacité du moteur électrique (15).

13. Bicyclette selon la revendication 12, caractérisée en ce que le palier de pédalier (19) est constitué par un tube de palier de pédalier extérieur (65) et un tube de palier de pédalier intérieur (66), disposé de façon coaxiale à une certaine distance radiale, un anneau (68) en matériau déformable, par exemple du caoutchouc ou une matière synthétique, étant prévu dans l'espace compris entre le tube de palier de pédalier extérieur et le tube de palier de pédalier intérieur et qu'il est prévu un absorbeur de pression (76) piézo-électrique, disposé dans le tube extérieur (65), s'appliquant sur la surface extérieure du tube de palier de pédalier intérieur (66).

14. Bicyclette selon la revendication 12, caractérisée en ce que le dispositif de mesure sert à mesurer un moment de torsion ou la force d'entraînement, en particulier la force de pédalage ou la force d'entraînement partant du pignon de pédalier (12), qu'il est prévu un élément déformable (84), en particulier en un matériau tel que du caoutchouc ou similaire, sur le pignon de pédalier (12) rotatif, cet élément pouvant subir une déformation variable en fonction de la grandeur du moment de torsion ou de la force, et que l'élément déformable (84) est relié à un premier corps d'aimant permanent (94) qui est associé à un deuxième corps d'aimant permanent (95) monté sur un élément (78) non rotatif, se trouvant à une certaine distance, et que la distance modifiable par la déformation de l'élément déformable (84) avec le premier corps d'aimant permanent (94) se trouvant sur ce dernier, entre les deux corps d'aimant permanent (94, 95), est mesurée à l'aide d'un dispositif de mesure (96) du champ électromagnétique, en particulier sous la forme d'un magnétomètre.

15. Bicyclette selon la revendication 14, caractérisée en ce que la deuxième plaque d'aimant permanent (95) est fixée sur le tube de palier de pédalier (78).

16. Bicyclette avec un dispositif de mesure selon la revendication 15, caractérisée en ce que l'élément déformable (84) est conçu sous forme annulaire ou sous la forme d'un anneau, qu'il est disposé entre les rayons (81, 82, 83) du pignon de pédalier (12) et qu'il relie ces rayons entre eux.

0 079 573

FIG.1

FIG.2

FIG.3

FIG.4

FIG.5

FIG.6

FIG.7